# EUROPEAN PATENT APPLICATION

(11) **EP 1 367 834 A2**
(43) Date of publication of application: **03.12.2003**
(21) Application number: 03101488.9
(22) Date of filing: 23.05.2003
(51) Int. Cl.: H04N 7/28

(54) **Method and arrangement for forming HCVQ vector library**

(30) Priority: 23.05.2002 FI 20020973
(71) Applicant: Oplayo Oy, 00180 Helsinki (FI)
(72) Inventor: Pikkarainen, Petri, 01610, VANTAA (FI); Kesäniemi, Martti, 00530, HELSINKI (FI)
(74) Representative: Savela, Antti-Jussi

(57) **Abstract**

The invention relates to encoding and decoding images. The idea of the invention is to form HCVQ codevectors, in a receiving terminal. A group of codevectors forms a codebook, and a group of codebooks forms a codebook library. Only a VQ codebook and a certain number of modification vectors are sent to the receiving terminal. The compressed HCVQ vectors are formed using the received VQ and modification vectors.

## Description

### Field of the Invention

This invention relates to encoding and decoding images. More specifically, the invention relates to generating HCVQ codebooks. Furthermore, the invention relates to encoding and decoding video in streaming media solutions. Streaming media means that a video is transmitted through a network from a sending party to a receiving party in real-time when the video is shown on the terminal of the receiving party.

### Background of the Invention

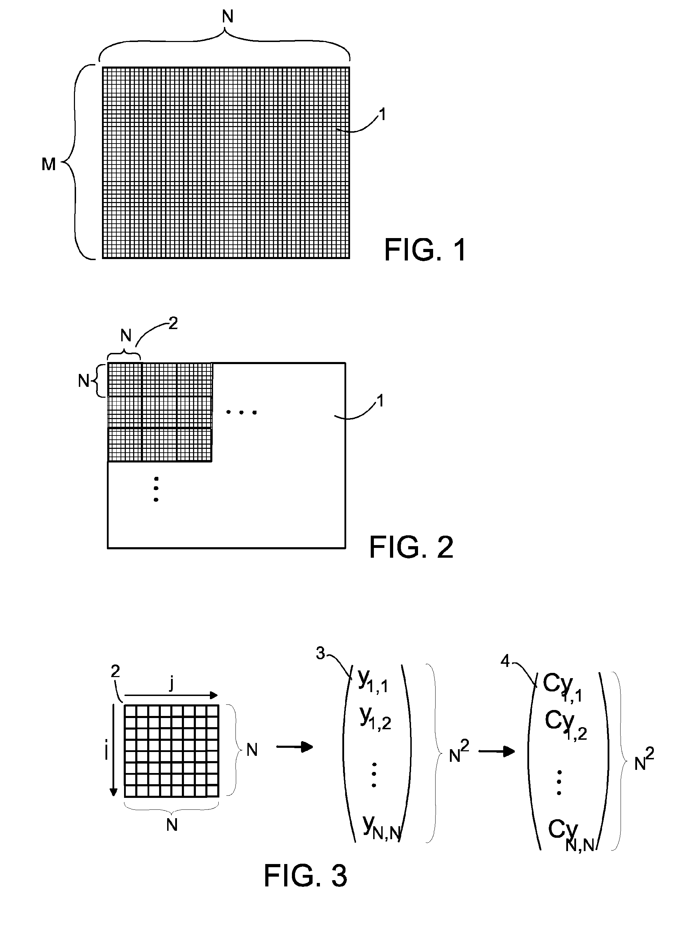

A digital video consists of a sequence of frames - there are typically 25 frames per second - each frame **1** consisting of *M1xN1* pixels, see Fig. **1**. Each pixel is further represented by 24 bits in some of the standard color representations, such as RGB where the colors are divided into red (R), green (G), and blue (B) components that are further expressed by a number ranging between 0 and 255. A capacity of a stream of *M1xN1x24x25* bits per second (bps) is needed for transmitting all this information. Even a small frame size of 160x120 pixels yields 11,5 Mbps and is beyond the bandwidth of most fixed and, in particular, all wireless Internet connections (9.6kbps (GSM) to some hundreds of kbps within the reach of WLAN). However, all video sequences contain some amount of redundancy and may therefore be compressed.

Any video signal may be compressed by dropping some of the frames, i.e., reducing the frame rate, and/or reducing the frame size. In color videos, a clever choice of the color representation may further reduce the visually relevant information to one half bit count or below, for example the standard transition from RGB to YCrCb representation. YCrCb is an alternative 24 bit color representation obtained from RGB by a linear transformation. The Y component takes values between 0 and 255 corresponding to the brightness or the gray-scale value of the color. The Cr and *Cb* components take values between -128 and +127 and define the chrominance or color plane. In radial coordinates, the angle around the origin or hue determines the actual color while the distance from the origin corresponds to the saturation of the color. In what follows, these kinds of steps are assumed taken and the emphasis is on optimal encoding of the detailed information present in the remaining frames.

All video compression techniques utilize the existing correlations between and within the frames, on the one hand, and the understanding of the limitations of the human visual system, on the other. The correlations such as immovable objects and areas with constant coloring, may be compressed without loss, while the omission of invisible details is by definition lossy. Further compression requires compromises to be made in the accuracy of the details and colors in the reproduced images.

Retaining good visual quality of the compressed videos is just one of the many requirements facing any practical video compression technology. For commercial purposes, the encoding process should be reasonably fast in order to facilitate the encoding of large amounts of video content. Apart from a possible initial buffering of frames in the computer's memory, the viewing of a video typically occurs in real time demanding real time decoding and playback of the video. The range of intended platforms from PC's (personal computers) to PDA's (personal digital assistant) and possibly even to third generation mobile phones sets further constraints on the memory usage and processing power needs for the codecs (coder-decoder).

Fast decoding is even more important for the so-called streaming videos, which are transmitted to the receiver in real time as the user watches. For streaming videos, a limited data transmission capacity imposes a minimum compression ratio over the full length of the video. This is because the bit rate for transmitting the video must remain within the available bandwidth at all times.

Most video compression technologies comprise two components: an encoder used in compressing the videos and a decoder or player to be installed in the prospective viewing apparatus. Commonly, such decoders are downloaded into the viewing apparatus for being installed permanently or just for the viewing time of a video. Although this downloading needs to be done only once for each player version, there is a growing interest towards player-free streaming video solutions, which can reach all internet users. In such solutions, a small player application is transmitted to the receiving end together with the video stream. In order to minimize the waiting time due to this overhead information, the application, i.e., the decoder, should be made extremely simple.

In practice the image is typically divided into blocks **2** of *NxN* pixels (Fig. **2**) and each block is analysed independent of the others.

The simplest way to compress the information for an image block is to reduce the accuracy in which the luminance (and naturally chrominance, i.e. color) values are expressed. Instead of the original 256 possible luminance values one could consider 128 (the values 0,2,...,254) or 64 values (0,4,...,252) thereby reducing the number of bits per pixel needed to express the luminance information by 12.5% and 25%, respectively. Simultaneously such a scalar quantization procedure induces encoding errors; in the previous exemplary cases the average errors are 0.5 and 1 luminance unit per pixel, respectively.

In VQ (Vector Quantization) methods, the *NxN* image blocks **2**, or *N*² vectors **3** (see Fig. **3**), are matched to vectors of the same size from a pre-trained (trained prior to the actual use) codebook. For each block, the best matching code vector **4** is chosen to represent the original image block. All the image blocks **2** are thus represented by a finite number of code vectors **4**, i.e., the vectors are quantized. The indices of the best matching vectors are sent to the decoder and the image is recovered by finding the vectors from the decoder's copy of the same codebook.

The encoding quality of VQ depends on the set of training images used in preparing the codebook and the number of vectors in the codebook. The dimension of the vector space depends quadratically on the block dimension *N ( N*^{*2*} pixel values) whereas the number of possible vectors grows *as 256*^{*N*}² (when considering luminance vectors) -the vectors in the codebook should be representative for all these vectors. Therefore in order to maintain a constant quality of the encoded images while increasing the block size, the required codebook size increases exponentially. This fact leads to huge memory requirements and quite as importantly to excessively long search times for each vector. Several extensions of the basic VQ scheme have been proposed in order to attain good quality with smaller memory and/or search time requirements.

Some extensions such as the tree-search VQ only aim at shorter search times as compared to the codebook size. These algorithms do not improve the image quality (but rather deteriorate it) and are of interest here only due to their potential for speeding up other VQ based algorithms.

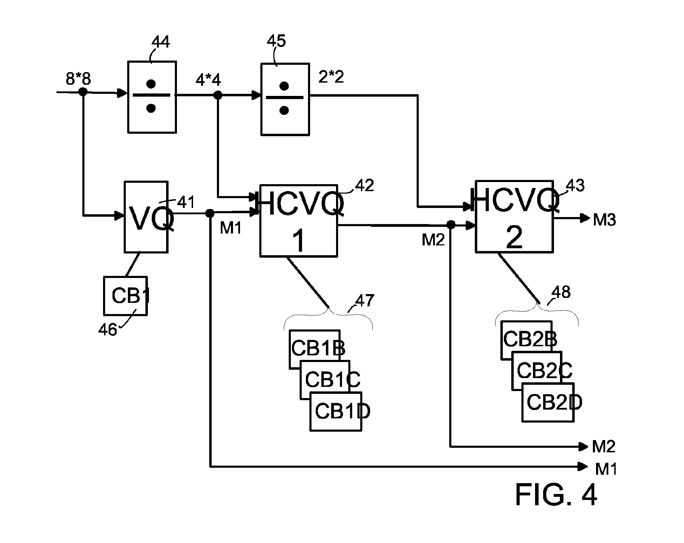

The VQ algorithms aiming at improving the image quality typically use more than one specialized codebook. Depending on the details of the algorithm, these can be divided into two categories: they either improve the encoded image block hierarchically, see Fig. **4**, such that the image block is divided into smaller blocks, which are further encoded using another codebook or codebooks thereby forming a more accurate encoding result, or they first classify the image material in each block and then use different codebooks (**47**, **48**) for different kinds of material (edges, textures, smooth surfaces). Fig. 4 represents an example of HCVQ (Hierarchical Classifying Vector Quantization) arrangement, i.e. it is a combination of a hierarchical and classifying system.

The multi-stage variants are also often denoted as cascaded or hierarchical VQ, while the latter ones are known as classified VQ. The motivation behind all these is that by specializing the codebooks, one reduces the effective dimension of the vector space. Instead of representing all imaginable image blocks, one codebook can dedicate to certain features. In cascaded VQ variants, the vector dimension is often further reduced by decreasing the block size between the stages as illustrated in Fig. **4**.

The compression techniques of VQ codecs are always asymmetric with the emphasis on an extremely light decoding process. In its simplest form, the decoding merely consists of table lookups for the code vectors. The player application can be made very small in size and sent at the beginning of the video stream.

A codevector corresponds to a whole *NxN* block. If one vector index is sent for each block, the compression ratio is bigger the larger the block size is. However, a big codebook is needed in order to obtain good quality for large *N.* This implies longer times for both the encoding - vector search - and the transmission of the codebook to the receiving end.

On the other hand, the smaller the blocks, the more accurate the encoding result becomes. Smaller blocks or vectors also require smaller codebooks, which require less memory and are faster to send to the receiving end. Also the code vector search operation is faster rendering the whole encoding procedure faster. The disadvantage of smaller block size is the larger amount of indices to be transmitted.

In the improved VQ variants, vector space is split into parts and one codebook is prepared for each part. In the cascaded VQ, in particular, the image quality is improved by an effective increase in the number of achievable vectors *V* achieved with the successive stages of encoding. In the ideal case, where the vectors in the different stages were orthogonal, adding a stage *i* with a codebook of *V*_{*i*} vectors would increase *V* to *V*x*V*_{*i*}. This procedure can significantly improve the image quality with reasonable total codebook size and search times. This improvement is done at the expense of the number of bits needed to encode each block; this increases by n if *V*_{*i*}=2^{*n*}. The image quality is further improved if the block size is reduced between stages.

A problem with HCVQ solutions, however, is that the codebooks are still relatively large for very light solutions, such as for mobile phones, for sending them at the beginning of a streaming session. Consequently, the waiting time before the client terminal start to receive and display the streaming video is long, which is disturbing from the view of the client. The intention of the invention is to alleviate this drawback. This is achieved in a way described in the claims.

### Summary of the Invention

The idea of the invention is to form HCVQ codevectors, i.e. HCVQ vectors, in a receiving terminal. A group of codevectors forms a codebook, and a group of codebooks forms a codebook library. Only a VQ codebook (or codebooks) and a certain number of modification vectors are sent to the receiving terminal. The compressed HCVQ vectors are formed using the received VQ and modification vectors. Modification vectors are formed when the original VQ vectors are created by teaching. Compressed HCVQ vectors are used also in encoding of the video material. A number of the modification vectors is much less than a number of HCVQ vectors. Due to this the downloading time of the vectors at the beginning of a streaming video is considerably short compared to present time periods.

### Brief Description of the Drawings

In the following the invention is described in more detail by means of Figures **1** - **14** in the attached drawings where.
- Figure **1**: illustrates an example of pixels of an image,
- Figure **2**: illustrates an example of a division of an image into blocks,
- Figure **3**: illustrates an example of a block represented also as a vector and a codevector.
- Figure **4**: illustrates an example of a known HCVQ arrangement,
- Figure **5**: illustrates an example of a block of 4 * 4 pixels,
- Figure **6**: illustrates an example of quantized vector values in a color diagram,
- Figure **7**: illustrates an example of quantized HCVQ vector values in a color diagram,
- Figure **8**: illustrates an example of a VQ vector of 4 * 4 elements, and modification vectors of 2 * 2 elements,
- Figure **9**: illustrates an example of forming a HCVQ vector,
- Figure **10**: illustrates an example of how final HCVQ vectors are marked,
- Figure **11**: illustrates an example of an arrangement according to the invention,
- Figure **12**: illustrates an example of an environment where the invention is typically used,
- Figure **13**: illustrates an example of the inventive method, and
- Figure **14**: illustrates another example of the inventive method.

### Detailed Description of the Invention

As can be seen in Fig. **4**, the VQ quantization **41** for original blocks is usually made using one codebook **46**. Following quantizations are usually made for smaller blocks, in the case of Fig. **4** for blocks size of 4 * 4 and 2 * 2. Thus the original block size is divided **44, 45** into smaller blocks for the consecutive HCVQ quantizations **42, 43**. The following quantizations are made using HCVQ (Hierarchical Classified Vector Quantization) codebooks **47, 48**. The indices **M1, M2, M3** are sent to a receiving terminal wherein the corresponding codevectors are searched from the vector library of the terminal. Further, the following vector quantization needs the indices from the previous vector quantization in order to use a right codebook as the HCVQ quantization requires. In order to decoding the vector library must be sent beforehand to the terminal.

Let a VQ arrangement comprise a VQ stage for blocks size of 4 ^{*} 4 and a HCVQ for blocks size of 2 ^{*} 2. A codebook for the VQ stage contains, for example, 256 codevectors size of 4 ^{*} 4 for illumination values; same codevectors can be used for chrominance information._The number of the bits of the VQ codebooks achieves 8 * 4096 = 32 768 bits.

Let a single codebook for the HCVQ stage contain, for example, 16 codevectors size of 2 * 2. So, the size of the VQ codebook is 16 * 2 * 2 = 64 elements. Due to the division of 4 * 4 blocks into four 2*2 blocks and the HCVQ hierarchy each 2 ^{*} 2 block have own codebooks. Since there exist 256 different blocks size of 4 * 4 from the VQ stage and there are four 2 * 2 blocks in one block size of 4 * 4, a number of the HCVQ codebooks are 256 * 4 = 1024. Due to this the HCVQ codebook library contains 64 * 1024 = 65536 elements, which means 524 288 bits even if the same library is used for both luminance and chrominance information. As can be noticed the size of the HCVQ library is relatively large.

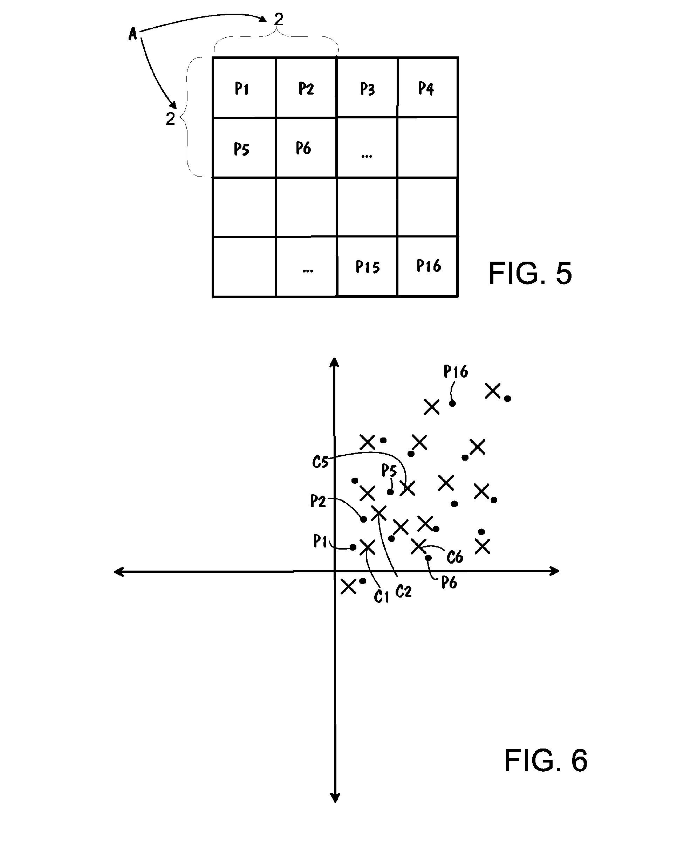

Fig. **5** shows an example of a block of 4^{*} 4 pixels **P1** to **P16**. When the pixel values are quantized, the values are mapped into a color diagram used. Let the color representation used be the YCrCb representation. The chrominance (color) map of the YCrCb representation is illustrated in Fig. **6**. It should be noted that the coordinate system is the Cartesian system. The pixel values of the block of Fig. **5** have been marked as dots in Fig. **6**. The VQ vector values have been marked as crosses; values C1 to C16 are the pixel values of the VQ vector closest to the original image block. Take a closer look at the pixel values of the first 2 ^{*} 2 quadrant (Fig. **5**, **A**) of the block. The quadrant consists of pixel values **P1, P2, P5,** and **P6**. As illustrated in Fig. **6**, **P1** is quantized to **C1, P2** to **C2, P5** to **C5,** and **P6** to **C6**. As can be noted, the real pixel values are quantized to the closest VQ vector found. All sixteen pixels of the blocks are quantized.

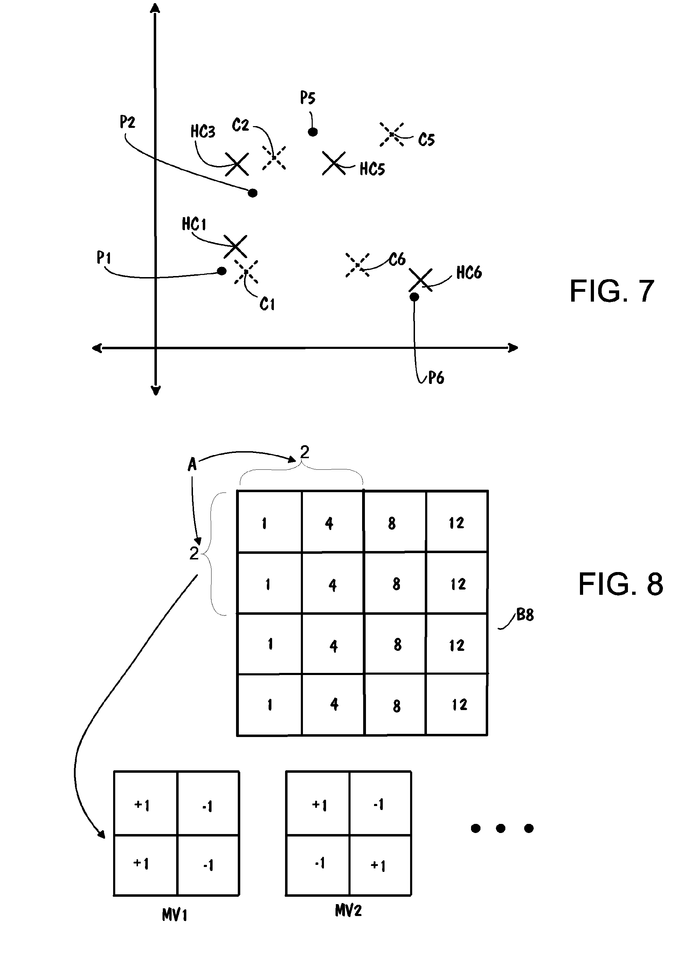

**Fig. 7** shows a HCVQ quantification of quadrant **A** illustrated in **Fig. 5.** The real pixel values are **P1, P2, P5,** and **P6** as in Fig **6**. The values of the best HCVQ vector are **HC1, HC2, HC5,** and **HC6**. The VQ values have been marked as dashed crosses for a comparison. By sending the HCVQ information the encoding result can be improved, because there are several possible variations of the sub-block of the best VQ vector.All 2 ^{*} 2 quadrants of the block are HCVQ quantized in a similar way.

Fig. **8** shows an example of a VQ vector of 4 * 4 elements, and modification vectors of 2 * 2 elements. The VQ vector values **1, 4, 8,** and **12** have been marked into the corresponding places of the block **B8**. Each 2^{*}2 quadrant can be modified using modification vectors. **MV1** and **MV2** represent modification vectors illustrating the modification values in the corresponding places of the 2^{*}2 blocks. Although, only two modification vectors are represented, a number of the modification vectors can be any suitable number - for example sixteen modification vectors can be a reasonable amount.

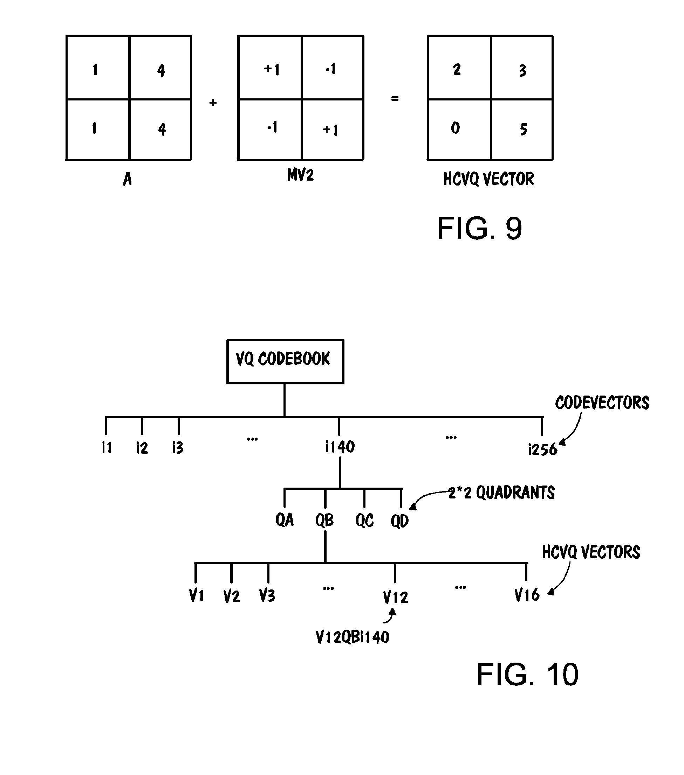

Fig. **9** shows an example of how the modification vectors are used. Considering quadrant **A**, showed in Fig. **8**, Let **MV2** be the best modification vector, so it is chosen to modify the VQ quantized quadrant **A**. The values of **MV2** are summed with the values of quadrant **A**, from which the result is the final HCVQ vector: [1, 4, 1, 4] + [+1, -1, -1, +1] = [2, 3, 0 ,5]. This can be described in another way with the help of Fig. 7. The values of modification vectors are correction values for the VQ values. For example, the original VQ value **C5** is summed with the modification value **Z** from which value **HC4** is achieved. In other words, modification values adjust VQ values.

Fig. **10** illustrates how final HCVQ vectors are marked in the HCVQ arrangement of one VQ codebook and one stage of HCVQ quantization. As mentioned before, in this kind of an arrangement, there are 65536 elements, i.e. 16384 HCVQ vectors of 2 * 2. Each HCVQ vector can be identified through the index system of the HCVQ arrangement. For example, vector **V12QBi140** is vector 12 in codebook Qbi140, which is a codebook for quadrant B of VQ vector i140. At present all 16384 HCVQ vectors are sent to a receiving end before sending a video. If sixteen modification vectors are used, only the VQ codebook containing 256 codevectors and sixteen modification vectors is sent to the receiving end. So the number of transmitted modification elements (pixel values) is 16 * 4 = 64 elements. As can be noted, the decrease of the transmitted data is remarkable.

Modification vectors are formed when VQ vectors are trained using training material. There exist several ways to make the modification vectors. For example, the differences between original vector values and VQ vector values can be used for obtaining the modification vectors. An algorithm of mean square error or another suitable algorithm, such as Lloyd's algorithm, calculates values for the modification vectors. If HCVQ vectors are still desired to form, it is also possible to use them when creating the modification vectors.

The modification vectors may be varied according to which VQ vector is to be modified. In other words, the magnitude of the modification vector is VQ vector specific. In general, the magnitude of the modification vectors should be larger for those VQ vectors that are far from the neighboring VQ vectors, and smaller to those parts of the VQ library where the vector density is high. Thus the magnitudes of the modification vectors are normally smaller in a coordinate area wherein a distance between neighboring vectors is short than in an area wherein a distance between neighboring vectors is short. The optimal variation scheme is determined when the VQ vectors are formed; the determination can be done as a part of the VQ teaching procedure. The variation information can be either sent with VQ vectors and modification vectors, or it can be approximated in the receiving terminal according to the VQ and modification vector libraries.

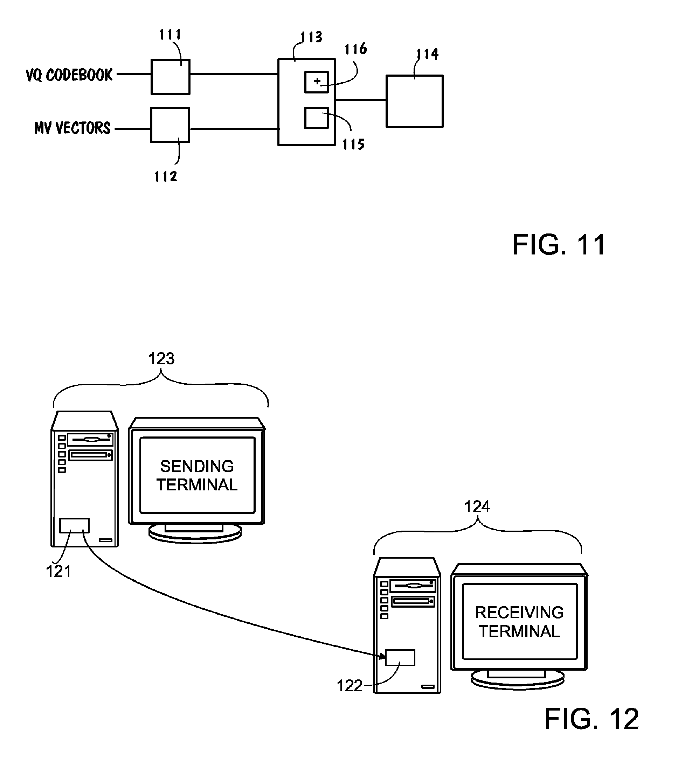

Fig. **11** shows an example of an arrangement according to the invention. The arrangement comprises receiving modules, which are adapted to receive VQ codebook or codebooks **111** and to receive modification vectors **112**. It is also possible to combine the receiving modules for a single module. A forming module **113** forms HCVQ vectors by summing the quadrants of the VQ codevectors and modification vectors using the indices of the quadrants for defining each result HCVQ vector. The index module in the forming module **115** handles identifying the quadrants, i.e. parts, of the VQ vectors so all quadrants of each VQ vectors are identified by using indices of the VQ vectors and quadrant labels (The quadrant labels indicate the quadrant of the VQ vector.). A calculating module **116** sums the values of the quadrants of the VQ vectors and the modification vectors. The HCVQ vectors are stored in a repository module **114**.

Fig. **12** shows an example of a typical environment where the inventive arrangement is used. In the sending terminal **123** an encoder **121** uses VQ codebook or codebooks and HCVQ library. Instead of sending the HCVQ library, the encoder sends the modification vectors to a receiving terminal **124**, where a decoder **122** use them for forming the HCVQ library. Naturally, the encoder also sends The VQ codebook. The inventive arrangement, as illustrated in Fig. **11**, is in the decoder but it can be a separate module as well.

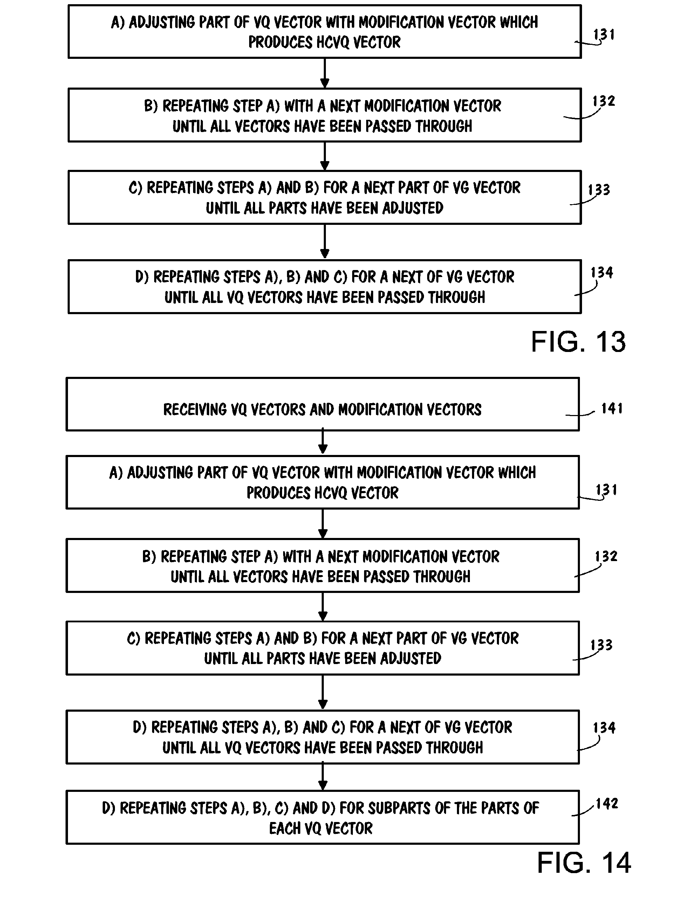

Fig. **13** represents an example of the inventive method. First, the first quadrant, i.e. the first part, of the VQ vector is adjusted **131** with the first modification vector producing a desired HCVQ vector. Next, the adjusting step is repeated **132** for the same quadrant with a next modification vector producing another HCVQ vector. In this way, a number of HCVQ vectors are formed for the quadrant. The number of the HCVQ vector is the number of modification vectors. After this, the second quadrant, i.e. the next part, of the VQ vector is adjusted **133** similarly. All quadrants are passed through similarly. After the first VQ vector is passed through, HCVQ vectors are produced **134** for the next VQ vector.

If should be noted that HCVQ vectors can be formed for subquadrants of the quadrants (subparts of the parts), if several HCVQ stages are used for coding video or other data. Naturally, the inventive method may comprise the step of receiving **141** the VQ vectors and the modification vectors before starting to produce HCVQ vectors, and the step of forming **142** HCVQ vectors for the subparts of the parts of each VQ vector as Fig. **14** illustrates. It should also be noted that the modification vector must be formed, i.e. trained, prior any use.

## Claims

1. A method for forming HCVQ vectors in a receiving terminal, **characterized in that** the method comprises the steps of:
a) adjusting a part of a VQ vector with a modification vector from which adjustment a HCVQ vector is formed,
b) repeating step a) with a next modification vector until all modification vectors have been passed through,
c) repeating steps a) and b) for a next part of the VQ vector until all parts have been adjusted,
d) repeating steps a), b), and c) for a next VQ vector until all VQ vectors have been passed through.

2. A method according to claim 1, **characterized in that** the steps a) comprises a step of summing values of the part of the VQ vector and values of the modification vector.

3. A method according to claim 2, **characterized in that** the method further comprises the step of receiving the VQ vectors and the modification vectors from a sending terminal before step a).

4. A method according to claim 3, **characterized in that** the method further comprises the prior step of forming the modification vectors

5. A method according to claim 1 or 4, **characterized in that** the method further comprises the step of repeating steps a), b), c), and d) for subparts of the parts of each VQ vector.

6. A method according to claim 1 or 5, **characterized in that** the parts of the VQ vectors are quadrants of the vectors.

7. A method according to claim 5, **characterized in that** the method further comprises the step of repeating steps a), b), c), and d) for subparts of the subparts of each VQ vector.

8. A method according to any of claims 1 - 7, **characterized in that** the magnitude of a single modification vector increases when a distance between neighboring VQ vectors increases.

9. A method according to claim 8, **characterized in that** the distance information is sent with the VQ vectors and the modification vectors from the sending terminal to the receiving terminal.

10. A method according to claim 8, **characterized in that** the distance information is approximated in the receiving terminal.

11. A method according to any of claims 1 - 10, **characterized in that** the magnitude of the modification vector is VQ vector specific

12. An arrangement for forming HCVQ vectors in a receiving terminal, **characterized in that** the arrangement comprises
- a receiving module adapted to receive VQ vectors and modification vectors from a sending element,
- a forming module for forming HCVQ vectors from the received VQ and modification vectors

13. An arrangement according to claim 12, **characterized in that** the arrangement further comprises a repository module for storing the HCVQ vectors.

14. An arrangement according to claim 12 or 13, **characterized in that** the receiving module is divided into two separate modules, the first module for the VQ vectors and the second module for the modification vectors.

15. An arrangement according to claim 12, 13, or, 14, **characterized in that** the forming module comprises an index module for identifying the parts of the VQ vectors, and a calculating module for summing values of the part of the VQ vector and values of the modification vector.

16. An arrangement according to any of claims 12 - 15, **characterized in that** the magnitude of a single modification vector increases when a distance between neighboring VQ vectors increases.

17. An arrangement according to claim 16, **characterized in that** the distance information is sent with the VQ vectors and the modification vectors from a sending terminal to the receiving terminal.

18. An arrangement according to claim 16, **characterized in that** the distance information is approximated in the receiving terminal.

19. An arrangement according to any of claims 12 - 18, **characterized in that** the magnitude of the modification vector is VQ vector specific.
